# EUROPÄISCHE PATENTSCHRIFT

(11) **EP 3 774 643 B1**
(45) Veröffentlichungstag und Bekanntmachung des Hinweises auf die Patenterteilung: **02.08.2023**
(21) Anmeldenummer: 19714422.3
(22) Anmeldetag: 28.03.2019
(51) Int. Cl.: C01B 3/02, C01B 3/38, C01B 3/48, C01C 1/04

(54) **BAUEINHEIT EINER AMMONIAKANLAGE UND AMMONIAKANLAGE ENTHALTEND DIESE BAUEINHEIT SOWIE VERFAHREN ZUM ANFAHREN DES FRONTENDS EINER AMMONIAKANLAGE**
UNIT OF AN AMMONIA PLANT AND AMMONIA PLANT INCLUDING THIS UNIT, AS WELL AS A METHOD FOR STARTING UP THE FRONT END OF AN AMMONIA PLANT
ÉLÉMENT D'UN SYSTÈME À AMMONIAC ET SYSTÈME À AMMONIAC CONTENANT CET ÉLÉMENT ET PROCÉDÉ DESTINÉ À DÉMARRER LE TERMINAL D'UN SYSTÈME À AMMONIAC

(30) Priorität: 29.03.2018 DE 102018107550
(43) Veröffentlichungstag der Anmeldung: 17.02.2021
(73) Patentinhaber: thyssenkrupp Industrial Solutions AG, 45143 Essen (DE); thyssenkrupp AG, 45143 Essen (DE)
(72) Erfinder: NÖLKER, Klaus, 44265 Dortmund (DE)
(74) Vertreter: thyssenkrupp Intellectual Property GmbH
(86) Internationale Anmeldenummer: PCT/EP2019/057897
(87) Internationale Veröffentlichungsnummer: WO 2019/185820

(56) Entgegenhaltungen:
- US-A- 3 810 975
- US-A- 4 681 745
- US-A- 4 728 506
- "A COMBINATION OF PROVEN TECHNOLOGIES", NITROGEN, BRITISH SULPHUR CO, LONDON, GB, Nr. 208, 1. März 1994 (1994-03-01), XP000434096, ISSN: 0029-0777

## Beschreibung

Die vorliegende Erfindung betrifft die Verwendung eines Stickstoffkreislaufs zum Erwärmen bzw. Anfahren des Frontends einer Ammoniakanlage. Ferner betrifft die Erfindung eine Baueinheit einer Ammoniakanlage sowie eine Ammoniakanlage enthaltend diese Baueinheit. Schließlich betrifft die Erfindung ein Verfahren zum Anfahren des Frontends einer Ammoniakanlage.

Bei der Herstellung von Ammoniak handelt es sich um ein großtechnisches Verfahren, das energetisch wie auch apparativ sehr aufwendig ist. Ausgehend von Kohlenwasserstoffen wird zumeist zunächst ein Synthesegas hergestellt, das aufwendig zu reinigen ist, bevor es für die Ammoniaksynthese eingesetzt werden kann. Hierbei haben alle Einzelschritte aufeinander abgestimmt zu sein, um die gewünschten Ausbeuten zu erzielen und Verunreinigungen zu vermeiden. Sowohl bei der Herstellung des Synthesegases wie auch bei der Ammoniaksynthese selber kommen Katalysatoren zum Einsatz. Diese sind empfindlich gegenüber Katalysatorgiften und erzielen ihren maximalen Wirkungsgrad bei optimierten Druck- und Temperaturbedingungen. Der Bau einer großtechnischen Ammoniakanlage, die nach dem Haber-Bosch-Verfahren arbeitet, kann bis zur Abnahme bzw. bis zur regulären Inbetriebnahme zwei bis drei Jahre in Anspruch nehmen. Schon aus diesem Grund sollte das erste Anfahren einer solchen Anlage effizient und unproblematisch gelingen. Das Anfahren einer Ammoniakanlage wird regelmäßig in Teilschritten vorgenommen. Begonnen wird dabei mit dem Anfahren des Frontends der Ammoniakanlage, welches regelmäßig die Baueinheiten umfasst, die für die Herstellung und Aufreinigung von Synthesegas erforderlich sind. Um dauerhaft hohe Wirkungsgrade sicherzustellen und um eine lange Lebensdauer zu ermöglichen, bedarf es zudem der Einhaltung von Wartungsintervallen. Hierfür ist die gesamte Ammoniakanlage komplett herunter zu fahren. Nach erfolgter Wartung ist die Ammoniakanlage sodann wieder anzufahren. Dies erfordert im Allgemeinen die Einhaltung vorgegebener Verfahrensparameter. Auch ist beim Anfahren sicherzustellen, dass keine Feuchtigkeit, beispielsweise mittels Kondensation, und auch keine Luft bzw. kein Sauerstoff in Baueinheiten der Ammoniakanlage gelangen, die empfindlich gegen Wasser bzw. Sauerstoff sind. Beim Anfahren einer Ammoniakanlage handelt es sich demgemäß nicht um einen trivialen Vorgang.

US4681745 offenbart die Verwendung von Stickstoff beim Anfahren eines Frontends einer Ammoniakanlage. Der Stickstoff wird im Frontend zirkuliert.

Daher lag der vorliegenden Erfindung die Aufgabe zugrunde, das Anfahren einer Ammoniakanlage in einer Weise verlässlich gestalten zu können, die nicht mit den Nachteilen des Stands der Technik behaftet ist und die insbesondere zuverlässig, kostengünstig und apparativ wenig aufwendig ist.

Demgemäß wurde eine Baueinheit einer Ammoniakanlage gefunden, enthaltend a) ein Frontend für eine Ammoniakanlage, umfassend einen Primärreformer, einen Sekundärreformer, einen HTS-Konverter und einen LTS-Konverter sowie gegebenenfalls einen Methanisator und b) mindestens einen Erdgasverdichter, ausgelegt und eingerichtet zum Verdichten von Erdgas und ebenfalls ausgelegt und eingerichtet zum Verdichten von Stickstoff, wobei der Erdgasverdichter stromaufwärts des Primärreformers angeordnet ist und wobei die Baueinheit stromabwärts des LTS-Konverters sowie gegebenenfalls stromabwärts des Methanisators über mindestens eine Leitung mit ei-nem Ammoniakkonverter einer Ammoniakanlage verbindbar ist, dadurch ge-kennzeichnet, dass die Baueinheit wenigstens eine stromabwärts des LTS-Konverters oder stromabwärts des Methanisators abzweigende Kreislaufleitung für Stickstoff umfasst, welche in den Bereich stromaufwärts des Erdgasver-dichters zurückführt, wobei die von der Baueinheit zu dem Ammoniakkonverter führende Leitung stromabwärts des LTS-Konverters oder stromabwärts des Methanisators absperrbar ist. Die Baueinheit kann so eingerichtet und ausgelegt sein, dass über den Erdgasverdichter verdichteter Stickstoff in gasförmiger, erwärmter Form durch den Primärreformer, Sekundärreformer, HTS-Konverter, LTS-Konverter und/oder Methanisator, insbesondere durch den Primärreformer, Sekundärreformer, HTS-Konverter und LTS-Konverter sowie gegebenenfalls durch den Methanisator, leitbar ist. Eine solche erfindungsgemäße Baueinheit ist von besonderem Vorteil, die in der Weise ausgelegt und eingerichtet ist, dass der zum Fluten und Erwärmen der Komponenten der Baueinheit verwendete Stickstoff zu dem Erdgasverdichter rückgeführt und in diesem zur erneuten Verwendung verdichtet werden kann. Durch diesen Stickstoffkreislauf gelingt ein sehr kosten- und materialsparendes Anfahren des Frontends einer Ammoniakanlage.

Die erfindungsgemäße Baueinheit ist in einer besonders zweckmäßigen Ausgestaltung ferner ausgestattet mit mindestens einer Heizvorrichtung zum Erwärmen des dem Erdgasverdichter entstammenden Stickstoffs. Außerdem hat es sich als vorteilhaft erwiesen, die erfindungsgemäße Baueinheit ebenfalls mit mindestens einer Steuer- und/oder Regeleinheit zu versehen, welche ausgelegt und eingerichtet ist, um die Menge und/oder die Temperatur des in die Komponenten der Baueinheit einzuspeisenden Stickstoffs zu kontrollieren und einzustellen. Hierdurch gelingt es, die Komponenten der erfindungsgemäßen Baueinheit möglichst zügig und komplikationsfrei auf eine Temperatur zu bringen, bei der das Frontend einer Ammoniakanlage angefahren werden kann.

Die der Erfindung zu Grunde liegende Aufgabe wird des Weiteren gelöst durch eine Ammoniakanlage enthaltend eine erfindungsgemäße Baueinheit. Diese Ammoniakanlage enthält neben einem Ammoniakreaktor in einer praktischen Ausgestaltung ferner mindestens einen Kompressor und mindestens einen Wärmetauscher.

Ferner wird die der Erfindung zu Grunde liegende Aufgabe gelöst durch ein Verfahren zum Anfahren des Frontends einer Ammoniakanlage, umfassend a) die Zurverfügungstellung einer erfindungsgemäßen Baueinheit, b) das Verdichten von Stickstoff in einem Erdgasverdichter, c) die Entnahme von Stickstoff aus dem Erdgasverdichter, d) das Erwärmen des entnommenen Stickstoffs, e) das Durchleiten des erwärmten Stickstoffs durch den Primärreformer, den Sekundärreformer, den HTS- Konverter und/oder den LTS-Konverter sowie gegebenenfalls den Methanisator der erfindungsgemäßen Baueinheit unter Erwärmung mindestens einer dieser Komponenten des Frontends der Ammoniakanlage, und f) das Rückführen des zur Erwärmung genutzten Stickstoffs zu dem Erdgasverdichter. Der rückgeführte Stickstoff kann in dem Erdgasverdichter erneut verdichtet und wiederverwendet werden. Hierdurch gelingt die Verwendung eines geschlossenen Stickstoffkreislaufs für das Anfahren des Frontends einer Ammoniakanlage. Auch bedarf es nicht des Einsatzes eines separaten Verdichters. Vielmehr kann bei dem erfindungsgemäßen Verfahren auf den Erdgasverdichter für die Verdichtung des Stickstoffs zurückgegriffen werden. In einer besonders vorteilhaften Ausgestaltung sieht das erfindungsgemäße Verfahren vor, dass der dem Erdgasverdichter entstammende, erwärmte Stickstoff durch den Primärreformer, den Sekundärreformer, den HTS- Konverter und den LTS-Konverter sowie gegebenenfalls den Methanisator unter Erwärmung dieser Komponenten des Frontends der Ammoniakanlage geleitet wird. Auf diese Weise kann das Frontend unproblematisch angefahren werden.

Gemäß einer Weiterentwicklung des erfindungsgemäßen Verfahrens wird dem Erdgasverdichter entnommener Stickstoff vor dem Durchleiten durch den HTS- und/oder LTS-Konverter Wasserstoff in Mindermengen beigemengt. Alternativ oder zusätzlich kann der dem Erdgasverdichter entnommene Stickstoff, der durch den HTS- und/oder den LTS-Konverter geleitet wird, Wasserstoff in Mindermengen enthalten. Eine Mindermenge an Wasserstoff im Sinne der Erfindung ist eine solche Menge, die pro Volumeneinheit eine geringere Menge an Wasserstoffmolekülen aufweist als an Stickstoffmolekülen. Regelmäßig reicht bereits eine Menge im Bereich von 0.5 bis 5 mol-% an Wasserstoff aus, um beispielsweise den in dem Katalysatorbett des LTS-Konverters vorliegenden Katalysator mittels Reduktion zu aktivieren. Demgemäß wird in einer vorteilhaften Ausgestaltung des erfindungsgemäßen Verfahrens die Menge an Wasserstoff in dem Stickstoff derart eingestellt, dass der im Katalysatorbett des HTS-Konverters vorliegende Katalysator-Präcursor und/oder der im Katalysatorbett des LTS-Konverters vorliegende Katalysator-Präcursor, insbesondere der der im Katalysatorbett des LTS-Konverters vorliegende Katalysator-Präcursor, reduziert wird.

Gemäß der vorliegenden Erfindung kann in einem Kreislauf geführter Stickstoff zum Anfahren von mindestens einer Komponente, insbesondere einer Vielzahl an Komponenten, des Frontends einer Ammoniakanlage oder zum Anfahren des Frontends einer Ammoniakanlage genutzt werden. Hierbei ist regelmäßig vorgesehen, dass der Stickstoffkreislauf zum Erwärmen von mindestens einer Komponente, insbesondere einer Vielzahl an Komponenten, des Frontends einer Ammoniakanlage oder zum Erwärmen des Frontends einer Ammoniakanlage eingesetzt wird. Der Erfindung liegt dabei auch die überraschende Erkenntnis zugrunde, dass der Erdgasverdichter einer Ammoniakanlage effizient genutzt werden kann zum Verdichten von Stickstoff, welcher sodann in mindestens eine Komponente, insbesondere eine Vielzahl an Komponenten oder in sämtliche Komponenten, des Frontends der Ammoniakanlage zwecks Erwärmung derselben eingeleitet werden kann. Um ein komplikationsfreies Anfahren des Frontends einer Ammoniakanlage sicherzustellen, hat es sich als vorteilhaft erwiesen, dass der dabei erfindungsgemäß eingesetzte Stickstoff im Wesentlichen frei von Wasser, Sauerstoff und/oder Kohlenwasserstoffen, insbesondere im Wesentlichen frei von Wasser, Sauerstoff und Kohlenwasserstoffen, ist. Hierdurch kann ein kontaminationsfreies Anfahren gewährleistet werden, bei dem insbesondere die verwendeten Katalysatoren keinen Schaden nehmen.

Der erwärmte Stickstoff des Stickstoffkreislaufes kann in einer Ausgestaltung durch sämtliche Komponenten der Baueinheit des Frontends und anschließend zurück zum Erdgasverdichter geleitet werden. In einer weiteren Ausführungsform kann dieser erwärmte Stickstoff des Stickstoffkreislaufes sukzessive bis zum LTS-Konverter durch die Komponenten des Frontends einer Ammoniakanlage geleitet werden. In einer besonders vorteilhaften Ausgestaltung wird der erwärmte Stickstoff nach Durchleiten durch den LTS-Konverter auch noch durch den Methanisator weitergeleitet, bevor es zu dem Erdgasverdichter rückgeführt wird.

Mit der vorliegenden Erfindung wurde überraschend gefunden, dass sich durch Verwendung von in einem Erdgasverdichter verdichtetem, erwärmtem Stickstoff, welcher vorzugsweise in einem Kreislauf geführt wird, das Anfahren der Komponenten des Frontends einer Ammoniakanlage komplikationsfrei, apparativ unaufwendig und energieeffizient gelingt. Als besonders vorteilhaft hat sich hierbei herausgestellt, dass sich bei dieser Vorgehensweise Kondensations-, Oxidations- oder Crackingphänomene in den Katalysatorbetten von Primärreformer, Sekundärreformer, HTS-Konverter, LTS-Konverter und Methanisator verlässlich vermeiden lassen. Mit der vorliegenden Erfindung gelingt es folglich, das Frontend einer Ammoniakanlage wirtschaftlich und effizient anzufahren. Des Weiteren ermöglicht das erfindungsgemäße Verfahren, insbesondere auch dann, wenn der Stickstoff in einem Kreislauf geführt wird, nicht nur das Aufheizen des Frontends, sondern ebenfalls die gesonderte Reduktion/Aktivierung des Katalysators des LTS-Konverters und, sofern gewünscht, auch das Aufheizen des Methanisators.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

Nachfolgend wird die vorliegende Erfindung anhand von Ausführungsbeispielen unter Bezugnahme auf die beiliegenden Zeichnungen näher beschrieben. Dabei zeigen:
Figur 1 eine schematische Darstellung einer erfindungsgemäßen Anlage im normalen Betrieb;
Figur 2 eine entsprechende schematische Darstellung der in Figur 1 dargestellten Anlage in der Phase des Aufheizens mit Stickstoff.

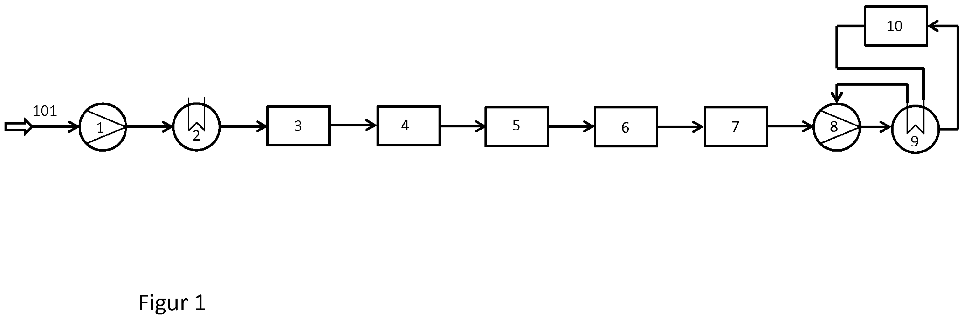

Zunächst wird nachfolgend auf die Figur 1 Bezug genommen. Die in der schematischen Darstellung skizzierte Anlage zur Herstellung von Ammoniak umfasst ein Leitungssystem, welchem bei 101 Erdgas zugeführt wird, welches in dem Erdgasverdichter 1 verdichtet wird und stromabwärts davon durch einen Wärmetauscher 2 geleitet wird. Stromabwärts des Wärmetauschers 2 durchströmt das Prozessgas im normalen Betrieb der Anlage beispielweise einen Primärreformer 3 und anschließend stromabwärts davon einen Sekundärreformer 4. Das aus dem Sekundärreformer 4 austretende Synthesegas durchströmt danach zunächst beispielsweise eine Einrichtung 5 zur Hochtemperatur-Wassergas-Shift-Reaktion (HTS), um den Anteil an Kohlenstoffmonoxid zu verringern und danach gegebenenfalls noch eine Einrichtung 6, in der eine Niedertemperatur-Wassergas-Shift-Reaktion (LTS) stattfindet. Danach wird das Synthesegas durch einen Methanisator 7 geleitet, das heißt eine Einrichtung, in der eine Methanisierung der Kohlenstoffoxide erfolgt und gelangt dann in einen Synthesegasverdichter 8, in dem es verdichtet wird. Dann durchströmt das Synthesegas einen Wärmetauscher 9, wird dort aufgewärmt und tritt in den Ammoniakkonverter 10 ein, in dem die Umsetzung von Wasserstoff und Stickstoff zu Ammoniak erfolgt.

Das erwärmte Produktgas, welches aus dem Ammoniakkonverter austritt, wird durch den Wärmetauscher 9 geleitet, dort abgekühlt, im Gegenstrom zu dem aufzuheizenden Synthesegas und strömt zurück zum Synthesegasverdichter 8, der somit als Zirkulator dient, mittels dessen das Gasgemisch im Kreislauf zurück zum Ammoniakkonverter 10 geführt wird. Die obige Beschreibung erläutert in Verbindung mit Figur 1 den Normalbetrieb der Ammoniakanlage.

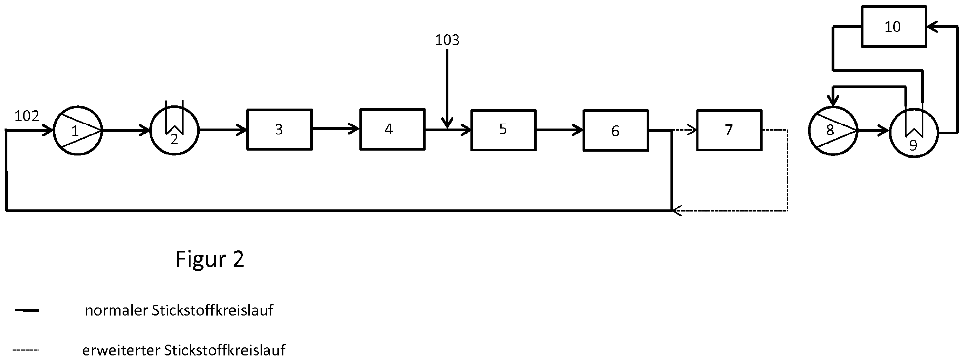

Nachfolgend wird nun unter Bezugnahme auf die Figur 2 der Betrieb der zuvor beschriebenen Anlage in einer Anfahrphase, in der erfindungsgemäß das Aufwärmen eines oder bevorzugt mehrerer Anlagenteile des Frontends der Anlage mit Stickstoff erfolgt, näher erläutert. Die Zugabe von möglichst reinem Stickstoff kann in der Anfahrphase oder nach einer Betriebsunterbrechung beispielsweise jeweils nur einmalig erfolgen, wobei man entweder flüssigen Stickstoff aus einem Behälter oder Tank zugibt oder vor Ort mittels Luftzerlegung oder PSA den Stickstoff herstellt. Dieser Stickstoff kann von außen her bei 102 stromaufwärts des Erdgasverdichters 1 zugegeben werden, wobei die von außen in den Stickstoffkreislauf führende Leitung in Figur 2 nicht dargestellt ist. Ein Vorteil der erfindungsgemäßen Lösung liegt darin, dass man den Stickstoff mittels des Erdgasverdichters 1 verdichten und zirkulieren kann, so dass man keinen zusätzlichen Verdichter benötigt. Mittels des Wärmetauschers 2 wird der Stickstoff aufgewärmt und dient dann zur Vorwärmung der stromabwärts auf den Wärmetauscher 2 folgenden Anlagenteile des Frontends, insbesondere durchströmt der Stickstoff den Primärreformer 3 und den Sekundärreformer 4. Stromabwärts des Sekundärreformers 4 kann über die Leitung 103 ein geringeres Volumen an Wasserstoff zugeführt werden, so dass ein Aktivieren des Katalysators im HTS-Konverter 5 und/oder im LTS-Konverter 6 mittels Reduktion durch das Gemisch aus Stickstoff und wenig Wasserstoff erfolgen kann. Stromabwärts des LTS-Konverters 6 kann der Stickstoff im Kreislauf zurückgeführt werden zum Erdgasverdichter 1, wie dies in durchgezogenen Linien in Figur 2 dargestellt ist.

Alternativ dazu kann man auch den Stickstoff zur Aufwärmung außerdem durch den Methanisator 7 (die Methanisierung) leiten und erst dann im Kreislauf zum Erdgasverdichter 1 zurückführen, was in der Zeichnung gemäß Figur 2 in gestrichelten Linien dargestellt ist. Das Führen des Stickstoffs im Kreislauf wie oben beschrieben kann über einen längeren Zeitraum erfolgen, wobei sich auch weitere Aufwärmphasen mit anderen Gasen anschließen können, bevor dann Synthesegas im regulären Betrieb der Anlage gemäß der Darstellung von Figur 1 dem Synthesegasverdichter 8 zugeführt wird. Dies bedeutet, in der genannten Phase der Aufwärmung mit Stickstoff und Führung des Stickstoffs im Kreislauf ist die Verbindung zum Synthesegasverdichter 8 unterbrochen, wie dies aus Figur 2 ersichtlich ist.

### Bezugszeichenliste

- 1: Erdgasverdichter
- 2: Wärmetauscher
- 3: Primärreformer
- 4: Sekundärreformer
- 5: Hochtemperatur-Wassergas-Shift (HTS)
- 6: Niedertemperatur-Wassergas-Shift (LTS)
- 7: Methanisator
- 8: Synthesegasverdichter/Zirkulator
- 9: Wärmetauscher
- 10: Ammoniakkonverter
- 101: Erdgas
- 102: Stickstoff
- 103: Wasserstoff

## Patentansprüche

1. Baueinheit einer Ammoniakanlage, enthaltend
a. ein Frontend für eine Ammoniakanlage, umfassend als Komponenten einen Primärreformer (3), einen Sekundärreformer (4), einen HTS-Konverter (5) und einen LTS-Konverter (6) sowie gegebenenfalls einen Methanisator (7), welche miteinander in Wirkverbindung stehen und
b. mindestens einen Erdgasverdichter (1), ausgelegt und eingerichtet zum Verdichten von Erdgas und zum Verdichten von Stickstoff,
wobei der Erdgasverdichter (1) stromaufwärts des Primärreformers (3) angeordnet ist und wobei die Baueinheit stromabwärts des LTS-Konverters (6) sowie gegebenenfalls stromabwärts des Methanisators (7) über mindestens eine Leitung mit einem Ammoniakkonverter (10) einer Ammoniakanlage verbindbar ist, **dadurch gekennzeichnet, dass** die Baueinheit wenigstens eine stromabwärts des LTS-Konverters (6) oder stromabwärts des Methanisators (7) abzweigende Kreislaufleitung für Stickstoff umfasst, welche in den Bereich stromaufwärts des Erdgasverdichters (1) zurückführt, wobei die von der Baueinheit zu dem Ammoniakkonverter (10) führende Leitung stromabwärts des LTS-Konverters (6) oder stromabwärts des Methanisators (7) absperrbar ist.

2. Baueinheit nach Anspruch 1, **dadurch gekennzeichnet, dass** diese ferner mindestens eine Heizvorrichtung (2) zum Erwärmen des dem Erdgasverdichter (1) entstammenden Stickstoffs umfasst, welche im Leitungssystem stromabwärts des Erdgasverdichters (1) und vorzugsweise stromaufwärts des Primärreformers (3) angeordnet ist.

3. Baueinheit nach Anspruch 1 oder 2, **dadurch gekennzeichnet, dass** diese mindestens eine Steuer- und/oder Regeleinheit umfasst, welche ausgelegt und eingerichtet ist, um die Menge und/oder die Temperatur des in die Komponenten der Baueinheit einzuspeisenden Stickstoffs zu kontrollieren und einzustellen.

4. Ammoniakanlage enthaltend eine Baueinheit nach einem der Ansprüche 1 bis 3.

5. Ammoniakanlage nach Anspruch 4, ferner umfassend mindestens einen Ammoniakreaktor (10), mindestens einen Kompressor (8) und mindestens einen Wärmetauscher (9), wobei die die Baueinheit mit der Ammoniakanlage verbindende Leitung vom Methanisator (7) oder vom LTS-Konverter (6) zu dem Kompressor (8) der Ammoniakanlage führt.

6. Verfahren zum Anfahren des Frontends einer Ammoniakanlage, insbesondere nach Anspruch 4 oder 5, umfassend
die Zurverfügungstellung einer Baueinheit nach einem der Ansprüche 1 bis 3,
das Verdichten von Stickstoff in dem Erdgasverdichter (1),
die Entnahme von Stickstoff aus dem Erdgasverdichter (1),
das Erwärmen des entnommenen Stickstoffs,
das Durchleiten des erwärmten Stickstoffs durch den Primärreformer (3), den Sekundärreformer (4), den HTS- Konverter (5) und /oder den LTS-Konverter (6) sowie gegebenenfalls den Methanisator (7) unter Erwärmung mindestens einer dieser Komponenten des Frontends der Ammoniakanlage und
das Rückführen des zur Erwärmung genutzten Stickstoffs zu dem Erdgasverdichter (1).

7. Verfahren nach Anspruch 6, **dadurch gekennzeichnet, dass** der erwärmte Stickstoff durch den Primärreformer (3), den Sekundärreformer (4), den HTS- Konverter (5) und den LTS-Konverter (6) sowie gegebenenfalls den Methanisator (7) unter Erwärmung dieser Komponenten des Frontends der Ammoniakanlage geleitet wird.

8. Verfahren nach Anspruch 6 oder 7, **dadurch gekennzeichnet, dass** der Stickstoff von der Entnahme aus dem Erdgasverdichter (1) bis zur Rückführung in den Erdgasverdichter (1) in einem geschlossenen Kreislauf geführt wird.

9. Verfahren nach einem der Ansprüche 6 bis 8, **dadurch gekennzeichnet, dass** dem, dem Erdgasverdichter (1) entnommenen Stickstoff, vor dem Durchleiten durch den HTS- (5) und/oder LTS-Konverter (6), insbesondere durch den LTS-Konverter (6), Wasserstoff in Mindermengen beigemengt wird oder dass der dem Erdgasverdichter (1) entnommene Stickstoff, insbesondere sofern und soweit für die Erwärmung des LTS-Konverters vorgesehen, Wasserstoff in Mindermengen enthält.

10. Verfahren nach Anspruch 9, **dadurch gekennzeichnet, dass** die Menge an Wasserstoff in dem Stickstoff derart eingestellt wird, dass der im Katalysatorbett des HTS-Konverters vorliegende Katalysator-Präcursor und/oder der im Katalysatorbett des LTS-Konverters vorliegende Katalysator-Präcursor, insbesondere der im Katalysatorbett des LTS-Konverters vorliegende Katalysator-Präcursor, reduziert werden.

11. Verwendung eines Stickstoffkreislaufs zum Erwärmen, insbesondere Anfahren, von mindestens einer Komponente oder einer Vielzahl an Komponenten des Frontends einer Ammoniakanlage nach Anspruch 4 oder 5.

12. Verwendung von in einem Kreislauf geführtem Stickstoff zum Erwärmen, insbesondere Anfahren, von mindestens einer Komponente oder einer Vielzahl an Komponenten des Frontends einer Ammoniakanlage nach Anspruch 4 oder 5.

13. Verwendung eines Erdgasverdichters einer Ammoniakanlage nach Anspruch 4 oder 5, zum Verdichten von Stickstoff, der eingerichtet und ausgelegt ist, Stickstoff in mindestens eine Komponente, insbesondere eine Vielzahl an Komponenten oder in sämtliche Komponenten, des Frontends der Ammoniakanlage einzuleiten und rückgeführten Stickstoff wieder aufzunehmen und zu verdichten.

14. Verwendung nach einem der Ansprüche 11 bis 13, **dadurch gekennzeichnet, dass** der Stickstoff im Wesentlichen frei von Wasser, Sauerstoff und/oder Kohlenwasserstoffen, insbesondere im Wesentlichen frei von Wasser, Sauerstoff und Kohlenwasserstoffen, ist.

15. Verwendung nach einem der Ansprüche 11 bis 14, **dadurch gekennzeichnet, dass** die Komponenten des Frontends der Ammoniakanlage einen Primärreformer (3), einen Sekundärreformer (4), einen HTS- Konverter (5) und einen LTS-Konverter (6) umfassen oder dass die Komponenten des Frontends der Ammoniakanlage einen Primärreformer (3), einen Sekundärreformer (4), einen HTS- Konverter (5), einen LTS-Konverter (6) und einen Methanisator (7) umfassen.

## Claims

1. Construction unit of an ammonia plant, comprising
a. a front end for an ammonia plant, comprising as components a primary reformer (3), a secondary reformer (4), an HTS converter (5) and an LTS converter (6) and optionally a methanizer (7), which are in operative connection with one another and
b. at least one natural gas compressor (1), designed and set up for compressing natural gas and for compressing nitrogen,
the natural gas compressor (1) being arranged upstream of the primary reformer (3) and it being possible for the constructional unit to be connected downstream of the LTS converter (6) and, if appropriate, downstream of the methanizer (7) via at least one line to an ammonia converter (10) of an ammonia plant, **characterised in that** the constructional unit has at least one line which is connected to the ammonia converter (10) of an ammonia plant, **in that** the constructional unit comprises at least one circuit line for nitrogen branching off downstream of the LTS converter (6) or downstream of the methanizer (7) and leading back into the region upstream of the natural gas compressor (1), it being possible to shut off the line leading from the constructional unit to the ammonia converter (10) downstream of the LTS converter (6) or downstream of the methanizer (7).

2. Unit according to claim 1, **characterized in that** it further comprises
at least one heating device (2) for heating the nitrogen originating from the natural gas compressor (1), which is arranged in the pipe system downstream of the natural gas compressor (1) and preferably upstream of the primary reformer (3).

3. Unit according to claim 1 or 2, **characterised in that** it comprises at least one control and/or regulating unit which is designed and arranged to control and adjust the quantity and/or the temperature of the nitrogen to be fed into the components of the unit.

4. Ammonia plant comprising an assembly according to any one of claims 1 to 3.

5. Ammonia plant according to claim 4, further comprising at least one ammonia reactor (10), at least one compressor (8) and at least one heat exchanger (9), wherein the line connecting the assembly unit to the ammonia plant leads from the methanizer (7) or from the LTS converter (6) to the compressor (8) of the ammonia plant.

6. A method for starting up the front end of an ammonia plant, in particular according to claim 4 or 5, comprising
providing an assembly according to any one of claims 1 to 3,
compressing nitrogen in the natural gas compressor (1),
the withdrawal of nitrogen from the natural gas compressor (1),
heating the extracted nitrogen,
passing the heated nitrogen through the primary reformer (3), the secondary reformer (4), the HTS converter (5) and/or the LTS converter (6) and, if appropriate, the methanizer (7) while heating at least one of these components of the front end of the ammonia plant, and
returning the nitrogen used for heating to the natural gas compressor (1).

7. Process according to claim 6, **characterized in that**
the heated nitrogen is passed through the primary reformer (3), the secondary reformer (4), the HTS converter (5) and the LTS converter (6) and, if applicable, the methanizer (7) while heating these components of the front end of the ammonia plant.

8. Process according to claim 6 or 7, **characterised in that**
the nitrogen is conducted in a closed circuit from its withdrawal from the natural gas compressor (1) to its return to the natural gas compressor (1).

9. Method according to one of the claims 6 to 8, **characterised in that**
hydrogen is added in small quantities to the nitrogen withdrawn from the natural gas compressor (1) before it is passed through the HTS converter (5) and/or LTS converter (6), in particular through the LTS converter (6), or **in that** the nitrogen withdrawn from the natural gas compressor (1) contains hydrogen in small quantities, in particular if and to the extent that it is intended for heating the LTS converter.

10. Process according to claim 9, **characterised in that**
the amount of hydrogen in the nitrogen is adjusted in such a way that the catalyst precursor present in the catalyst bed of the HTS converter and/or the catalyst precursor present in the catalyst bed of the LTS converter, in particular the catalyst precursor present in the catalyst bed of the LTS converter, is reduced.

11. Use of a nitrogen circuit for heating, in particular starting, at least one component or a plurality of components of the front end of an ammonia plant according to claim 4 or 5.

12. Use of nitrogen circulated in a circuit for heating, in particular starting up, at least one component or a plurality of components of the front end of an ammonia plant according to claim 4 or 5.

13. Use of a natural gas compressor of an ammonia plant according to claim 4 or 5 for compressing nitrogen, which is arranged and designed to introduce nitrogen into at least one component, in particular a plurality of components or into all components, of the front end of the ammonia plant and to take up and compress recirculated nitrogen.

14. Use according to any one of claims 11 to 13, **characterized in that**
the nitrogen is substantially free of water, oxygen and/or hydrocarbons, in particular substantially free of water, oxygen and hydrocarbons.

15. Use according to any one of claims 11 to 14, **characterized in that**
the components of the front end of the ammonia plant comprise a primary reformer (3), a secondary reformer (4), an HTS converter (5) and an LTS converter (6) or that the components of the front end of the ammonia plant comprise a primary reformer (3), a secondary reformer (4), an HTS converter (5), an LTS converter (6) and a methanizer (7).

## Revendications

1. Unité de construction d'une installation d'ammoniac, contenant
a. une partie frontale pour une installation d'ammoniac, comprenant comme composants un reformeur primaire (3), un reformeur secondaire (4), un convertisseur HTS (5) et un convertisseur LTS (6) ainsi qu'éventuellement un méthaniseur (7), qui sont en liaison active les uns avec les autres et
b. au moins un compresseur de gaz naturel (1), conçu et aménagé pour comprimer du gaz naturel et pour comprimer de l'azote,
le compresseur de gaz naturel (1) étant disposé en amont du reformeur primaire (3) et l'unité de construction pouvant être reliée en aval du convertisseur LTS (6) ainsi que, le cas échéant, en aval du méthaniseur (7), par l'intermédiaire d'au moins une conduite, à un convertisseur d'ammoniac (10) d'une installation d'ammoniac, caractérisé, que l'unité de construction comprend au moins une conduite de circulation pour l'azote, qui part en aval du convertisseur LTS (6) ou en aval du méthaniseur (7) et qui retourne dans la zone en amont du compresseur de gaz naturel (1), la conduite menant de l'unité de construction au convertisseur d'ammoniac (10) pouvant être fermée en aval du convertisseur LTS (6) ou en aval du méthaniseur (7).

2. Ensemble selon la revendication 1, **caractérisé en ce qu'**il comprend en outre comprend au moins un dispositif de chauffage (2) pour chauffer l'azote issu du compresseur de gaz naturel (1), qui est disposé dans le système de conduites en aval du compresseur de gaz naturel (1) et de préférence en amont du reformeur primaire (3).

3. Unité de construction selon la revendication 1 ou 2, **caractérisée en ce qu'**elle comprend au moins une unité de commande et/ou de régulation qui est conçue et agencée pour contrôler et ajuster la quantité et/ou la température de l'azote à injecter dans les composants de l'unité de construction.

4. Installation d'ammoniac contenant une unité de construction selon l'une des revendications 1 à 3.

5. Installation d'ammoniac selon la revendication 4, comprenant en outre au moins un réacteur d'ammoniac (10), au moins un compresseur (8) et au moins un échangeur de chaleur (9), la conduite reliant l'unité de construction à l'installation d'ammoniac allant du méthaniseur (7) ou du convertisseur LTS (6) au compresseur (8) de l'installation d'ammoniac.

6. Procédé de démarrage du front d'attaque d'une installation d'ammoniac, notamment selon la revendication 4 ou 5, comprenant
la mise à disposition d'un ensemble selon l'une des revendications 1 à 3,
la compression de l'azote dans le compresseur de gaz naturel (1),
le prélèvement d'azote dans le compresseur de gaz naturel (1),
le chauffage de l'azote prélevé,
le passage de l'azote chauffé à travers le reformeur primaire (3), le reformeur secondaire (4), le convertisseur HTS (5) et/ou le convertisseur LTS (6) ainsi que, le cas échéant, le méthaniseur (7), en chauffant au moins l'un de ces composants du front d'attaque de l'installation d'ammoniac et
le recyclage de l'azote utilisé pour le chauffage vers le compresseur de gaz naturel (1).

7. Procédé selon la revendication 6, **caractérisé en ce que**
l'azote chauffé est envoyé à travers le reformeur primaire (3), le reformeur secondaire (4), le convertisseur HTS (5) et le convertisseur LTS (6), et éventuellement le méthaniseur (7), en chauffant ces composants du front de l'installation d'ammoniac.

8. Procédé selon la revendication 6 ou 7, **caractérisé en ce que**
l'azote est conduit en circuit fermé depuis son prélèvement dans le compresseur de gaz naturel (1) jusqu'à son retour dans le compresseur de gaz naturel (1).

9. Procédé selon l'une des revendications 6 à 8, **caractérisé en ce que**
de l'hydrogène est ajouté en quantités minoritaires à l'azote prélevé dans le compresseur de gaz naturel (1) avant son passage dans le convertisseur HTS (5) et/ou LTS (6), notamment dans le convertisseur LTS (6), ou que l'azote prélevé dans le compresseur de gaz naturel (1), notamment si et dans la mesure où il est prévu pour le chauffage du convertisseur LTS, contient de l'hydrogène en quantités minoritaires.

10. Procédé selon la revendication 9, **caractérisé en ce que**
la quantité d'hydrogène dans l'azote est ajustée de manière à réduire le précurseur de catalyseur présent dans le lit de catalyseur du convertisseur HTS et/ou le précurseur de catalyseur présent dans le lit de catalyseur du convertisseur LTS, en particulier le précurseur de catalyseur présent dans le lit de catalyseur du convertisseur LTS.

11. Utilisation d'un circuit d'azote pour le chauffage, en particulier le démarrage, d'au moins un composant ou d'une pluralité de composants du front d'attaque d'une installation d'ammoniac selon la revendication 4 ou 5.

12. Utilisation d'azote en circuit fermé pour le chauffage, notamment le démarrage, d'au moins un composant ou d'une pluralité de composants du front d'attaque d'une installation d'ammoniac selon la revendication 4 ou 5.

13. Utilisation d'un compresseur de gaz naturel d'une installation d'ammoniac selon la revendication 4 ou 5, pour comprimer de l'azote, qui est agencé et conçu pour introduire de l'azote dans au moins un composant, en particulier dans une pluralité de composants ou dans tous les composants, du front d'attaque de l'installation d'ammoniac et pour récupérer et comprimer de l'azote recyclé.

14. Utilisation selon l'une des revendications 11 à 13, **caractérisée en ce que**
l'azote est sensiblement exempt d'eau, d'oxygène et/ou d'hydrocarbures, notamment sensiblement exempt d'eau, d'oxygène et d'hydrocarbures.

15. Utilisation selon l'une quelconque des revendications 11 à 14, **caractérisée en ce que**
les composants du front de l'installation d'ammoniac comprennent un reformeur primaire (3), un reformeur secondaire (4), un convertisseur HTS (5) et un convertisseur LTS (6) ou que les composants du front de l'installation d'ammoniac comprennent un reformeur primaire (3), un reformeur secondaire (4), un convertisseur HTS (5), un convertisseur LTS (6) et un méthaniseur (7).
